**Europäisches Patentamt**

**European Patent Office**

**Office européen des brevets**

(11) Veröffentlichungsnummer: **0 421 926 A1**

## (12) EUROPÄISCHE PATENTANMELDUNG

(21) Anmeldenummer: **90810721.2**

(22) Anmeldetag: **20.09.90**

(51) Int. Cl.⁵: **G02B 6/38, B24B 19/22**

(30) Priorität: **02.10.89 CH 3575/89**

(43) Veröffentlichungstag der Anmeldung:
**10.04.91 Patentblatt 91/15**

(84) Benannte Vertragsstaaten:
**AT BE CH DE DK ES FR GB GR IT LI LU NL SE**

(71) Anmelder: **DIAMOND S.A.**
**Via dei Patrizi 5**
**CH-6616 Losone-Locarno(CH)**

(72) Erfinder: **Marazzi, Silvio**

**CH-6654 Cavigliano(CH)**

(74) Vertreter: **Wenger, René et al**
**Hepp, Wenger & Partner AG Marktgasse 18**
**CH-9500 Wil(CH)**

(54) **Stecker für einen Lichtwellenleiter.**

(57) Die Anschrägung (6) der Faserendfläche (4) wird derart angebracht, dass rund um die Anschrägung ein Randbereich (7) verbleibt, der sich über 360° erstreckt. Die Anschrägung ist vom Randbereich durch eine ringförmige Vertiefung (8) abgegrenzt. Auf diese Weise hat der Steckerstift (3) an seiner Stirnseite (5) in jeder beliebigen Relativlage eine stets gleichbleibende Anschlagfläche.

Fig. 1

## STECKER FÜR EINEN LICHTWELLENLEITER

Die Erfindung betrifft einen Stecker für einen Lichtwellenleiter gemäss dem Oberbegriff von Anspruch 1. Bei optischen Steckverbindungen tritt an den Faserendflächen der miteinander zu koppelnden Lichtwellenleiter eine fresnel'sche Reflexion auf, wobei es zu einer Rückkopplung von Licht in die sendende Faser kommen kann. Dieses in den Sender zurück reflektierte Licht beeinträchtigt die Qualität des Uebertragungssystems und ist daher höchst unerwünscht. Aus diesem Grund wird die Faserendfläche angeschrägt, um eine möglichst hohe Rückflussdämpfung zu erreichen. Die reflektierten Lichtstrahlen werden so nur noch zu einem geringen Teil zurückgesendet, während der grössere Teil nach ausserhalb des Lichtwellenleiters abgestrahlt wird. Die theoretischen Grundlagen für die Berechnung der grösstmöglichen Rückflussdämpfung sind dem Fachmann bekannt.

Bei einigen bekannten Steckern wird die Stirnseite durch Schleifen derart plan angeschrägt, dass auch bei der grösstmöglichen Exzentrizität des Lichtwellenleiters die Faserendfläche vollständig von der Anschrägung erfasst wird. Diese Form der Anschrägung hat jedoch den Nachteil, dass als Stirnseite, welche quer zur Mittelachse des Steckerstifts angeordnet ist, nur noch ein Segment übrig bleibt. Der Steckerstift hat im wesentlichen die Form eines schief abgeschnittenen Zylinders. Da die Stirnseite des Steckers gleichzeitig die Berührungsfläche für die beiden sich gegenüberliegenden Steckerstifte bildet, ist die genannte Konfiguration sehr nachteilig. Bei den äusserst kleinen Durchmessern der Stekkerstifte von z.B. 2,5 mm verbleibt nur noch eine sehr kleine Berührungsfläche zwischen den beiden gekoppelten Steckerstiften. Schon geringfügige Schrägneigungen der verbleibenden Berührungsflächen können die Uebertragungsdämpfung stark beeinflussen.

Durch die JP-A-57/156159 ist ein Verfahren zum Schleifen von Steckerendflächen bekannt geworden, bei dem zum Bildung einer Anschrägung ein Werkzeug mit einer sphärischen Schlieffläche gegen die Stirnseite geführt wird, wobei die Drehachse des Werkzeuges exzentrisch zur Achse der Faser verläuft. Die Berührungsfläche an der Steckerstirnseite kann zwar dadurch etwas vergrössert werden, indem sie z.B. etwa sichelförmig verläuft. Eine saübere Abgrenzung zwischen der Anschrägung und der verbleibenden Berührungsfläche ist dabei aber nicht mehr gewährleistet. Je nach Werkstoff und Beschaffenheit des Werkzeuges können sich nämlich kleinste Materialverwerfungen oder Brauen bilden, welche die Planheit der Berührungsfläche und damit die Qualität der Steckverbindung beeinträchtigen können. Problematisch wird der Schleifvorgang besonders dann, wenn der Steckerstift auch an der Stirnseite zwei verschiedene Werkstoffe aufweist, also z.B. einen Aussenmantel aus Hartmetall und einen Kern aus einer plastisch verformbaren Legierung.

Es ist daher eine Aufgabe der Erfindung, einen Stecker der eingangs genannten Art zu schaffen, dessen Stirnseite bei unvermindert hoher Rückflussdämpfung eine optimale Anschlagfläche für die Steckverbindung bildet. Diese Aufgabe wird erfindungsgemäss mit einem Stecker gelöst, der die Merkmale von Anspruch 1 aufweist.

Dadurch, dass die Anschrägung nur gerade die Faserendfläche und den diese unmittelbar umgebenden Abschnitt der Stirnseite erfasst, verbleibt rund um den Lichtwellenleiter ein ununterbrochener, kreisringförmiger Randbereich. Dieser äussere Randbereich hat die gleichen, wenn nicht noch bessere An schlageigenschaften, wie eine kreisförmige Stirnseite ohne Anschrägung. In jeder beliebigen Relativlage zweier, gegeneinander gekoppelter Steckerstifte bleibt der Anschlag aufrechterhalten und die sich berührende Gesamtfläche bleibt stets gleich gross. So könnten z.B. auch zwei Steckerstifte mit angeschrägten Fasern zur gewollten Beeinflussung der Dämpfung relativ zueinander verdreht werden, wobei eine Verdrehung mühelos über 360° möglich ist. Bei den bekannten Steckern wäre dies problematisch, da sich die berührende Gesamtfläche stets verändert und damit auch die Gefahr einer unkorrekten Positionierung oder einer Beschädigung zunimmt.

Da die Anschrägung durch eine ringförmige Vertiefung vom äusseren Randbereich abgegrenzt ist, lässt sich der Schrägschliff besser anbringen. Die zu bearbeitende Fläche bleibt auf ein Minimum beschränkt und allfällige Unregelmässigkeiten im Randbereich des Schliffs können die Planheit des Randbereichs an der Steckerstirnseite nicht beeinflussen.

Wenn der Steckerstift aus einem Aussenmantel aus relativ hartem Material und aus einem Kern aus weicherem Material besteht, ist es besonders vorteilhaft, wenn der nicht angeschrägte Randbereich durch die Stirnseite des Aussenmantels gebildet wird. Auf diese Weise muss das harte Material des Aussenmantels überhaupt nicht mehr bearbeitet werden. Die Anschrägung liegt nur im Bereich des weicheren und damit besser zu bearbeitenden Kernteils.

Je nach dem eingesetzten Schleifwerkzeug kann die Anschrägung plan oder zylindrisch bzw. kugelförmig nach innen gekrümmt verlaufen. Ausserdem kann der Lichtwellenleiter - wie an sich bekannt - parallel zur Mittelachse oder schräg zur Mittelachse des Steckerstifts fixiert sein.

Ausführungsbeispiele der Erfindung sind in den Zeichnungen dargestellt und nachstehend genauer beschrieben. Es zeigen:

Figur 1 einen Querschnitt durch einen erfindungsgemässen Steckerstift mit zylindrischem Schliff in stark vergrösserter

Figur 2 eine Ansicht des um 90° gedrehten Steckerstifts gemäss Figur 1,

Figur 3 eine Draufsicht auf den Steckerstift gemäss Figur 2,

Figur 4 einen Querschnitt durch ein abgewandeltes Ausführungsbeispiel eines erfindungsgemässen Steckerstifts mit planem Schliff, und

Figur 5 einen Querschnitt durch ein weiteres Ausführungsbeispiel mit sphärischem Schliff.

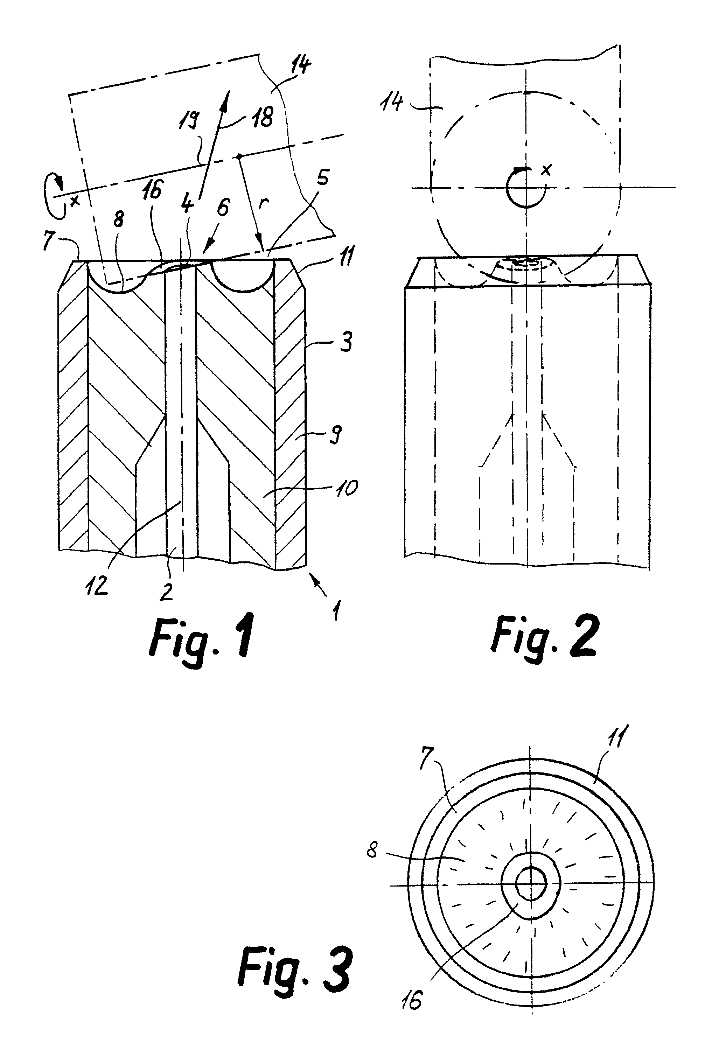

In den Figuren 1 bis 3 ist ein erfindungsgemässer Stecker 1 dargestellt, bei dem trotz Anschrägung der Faserendfläche 4 ein umlaufender Randbereich 7 verbleibt, der sich über 360° erstreckt. Der Steckerstift 3 ist auf an sich bekannte Weise zweiteilig aufgebaut und hat einen Aussenmantel 9, der beispielsweise aus Hartmetall oder aus Keramikwerkstoff oder aus gehärtetem Stahl gefertigt sein kann. Der Kern 10 des Stekkerstifts ist aus einem weicheren Material, z.B. aus einer Nichteisenlegierung gefertigt, und der Lichtwellenleiter 2 kann nach dem Einsetzen auf an sich bekannte Weise in die optimale Lage geprägt werden. Die optische Achse 12 des Lichtwellenleiters verläuft parallel zur Mittelachse des Steckerstifts 3. An der Stirnseite 5 ist eine ringförmige Vertiefung 8 angebracht, welche jedoch den Aussenmantel 9 nicht erfasst. Die Vertiefung kann bereits in den Kern 10 eingegossen sein oder sie kann nachträglich durch Ausdrehen hergestellt werden. Rund um die Faserendfläche 4 verbleibt ein Abschnitt 16, so dass auch bei der höchstzulässigen Exzentrizität des Lichtwellenleiters die Faserendfläche 4 stets vom Material des Kernteils 10 umgeben ist. Der Durchmesser des Steckerstifts 3 liegt im Bereich zwischen 2 mm bis 4 mm. Eine umlaufende Fase 11 erleichtert den Steckvorgang.

Die Anschrägung der Faserendfläche 4 und des Abschnitts 16 erfolgt bei diesem Ausführungsbeispiel mit einer Schleifscheibe 14, die um die Schleifscheibenachse 19 in Pfeilrichtung x gedreht wird. Die zylindrische Schleifscheibe hat einen Radius r, so dass die Anschrägung zylindrisch nach innen gekrümmt verläuft. Der Winkel zwischen der Schleifscheibenachse 19 und der optischen Achse 12 kann rechnerisch ermittelt werden, so dass unter Berücksichtigung aller möglichen Parameter die gewünschte Rückflussdämpfung erzielt wird. Die Anschrägung an der Faserendfläche 4 bewirkt eine Ablenkung des Lichtstrahls in der Ablenkachse 18 relativ zur optischen Achse 12 des Lichtwellenleiters.

Der harte Aussenmantel 9 wird durch den Schrägschliff überhaupt nicht tangiert. Die zylindrische Krümmung der Anschrägung kann ohne weiteres vernachlässigt werden, da der Durchmesser des Lichtwellenleiters äusserst gering ist.

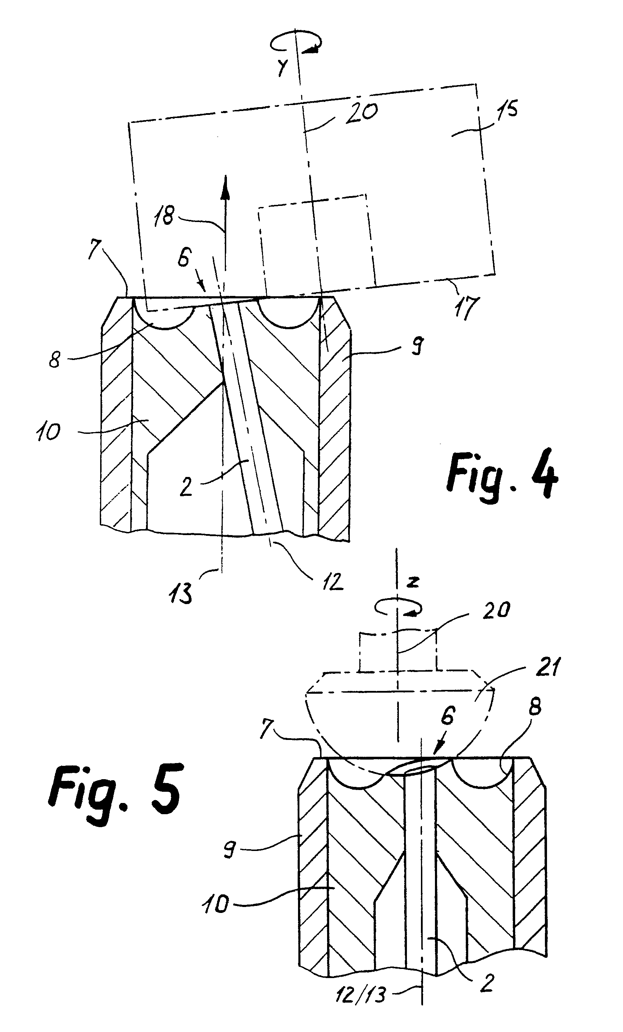

In Figur 4 ist ein alternatives Ausführungsbeispiel dargestellt, bei dem der Steckerstift jedoch ähnlich aufgebaut ist, wie beim Ausführungsbeispiel gemäss den Figuren 1 bis 3. Die optische Achse 12 des Lichtwellenleiters ist jedoch schräg zur Mittelachse 13 des Steckerstifts angeordnet. Im Gegensatz zum vorher beschriebenen Ausführungsbeispiel verläuft die Anschrägung jedoch nicht gekrümmt, sondern plan. Die plane Anschrägung kann dadurch erreicht werden, dass für den Schrägschliff eine Topfscheibe 15 verwendet wird, die um eine Schleifscheibenachse 20 in Pfeilrichtung y gedreht wird. Die Schleiffläche 17 in der Topfscheibe erzeugt dabei die Anschrägung. Auch hier verbleibt rund um die Anschrägung ein Randbereich 7, der sich über 360° erstreckt. Welche Relativlage die optische Achse 12 aufweist, hängt somit weitgehend vom Verwendungszweck des Steckers ab.

Die Faserendfläche 4 kann derart schräg gewählt werden, dass der Strahl parallel zur Steckerachse austritt.

Bei dieser Anordnung des Lichtwellenleiters kann z.B. das austretende Licht unmittelbar in ein Linsensystem eingespeist werden.

Beim Ausführungsbeispiel gemäss Figur 5 sind die optische Achse 12 der Faser 2 und die Steckerachse 13 wiederum parallel. Die Anschrägung 6 ist jedoch kugelförmig ausgebildet und wird durch einen Kugelschleifkopf 21 erzeugt, der um die Achse 20 in Pfeilrichtung z rotiert. Die Achse 20 ist zu den Achsen 12/13 versetzt angeordnet. Auch die konkave Krümmung an der Faserstirnseite kann praktisch vernachlässigt werden. Nicht dargestellt, aber ebenfalls denkbar wäre schliesslich noch das Anbringen einer Anschrägung mittels einer Schleifscheibe, deren Rotationsachse im rechten Winkel zum Steckerachse 13, jedoch versetzt zu dieser verläuft. Das Ergebnis wäre ebenfalls eine zylindrische Anschrägung, aber mit aussermittigem Zentrum.

## Ansprüche

1. Stecker (1) für einen Lichtwellenleiter (2), der in einem Steckerstift (3) fixiert ist, wobei die Faserendfläche (4) an der Stirnseite (5) des Steckerstifts zum Erzielen einer hohen Rückflussdämpfung relativ zur optischen Achse (12) des Lichtwellenleiters und relativ zur Mittelachse (13) des Steckerstifts angeschrägt ist, dadurch gekennzeichnet, dass die Anschrägung (6) nur die Faserendfläche (4) und den diese unmittelbar umgebenden Abschnitt (16) der Stirnseite (5) erfasst, und dass die Anschrägung vollständig von einem Randbereich (7) der Stirnseite umgeben ist, der auf einer quer zur Mittelachse (13) des Steckerstifts angeordneten Ebene liegt, wobei die Anschrägung durch eine ringförmige Vertiefung (8) vom Randbereich (7) abgegrenzt ist.

2. Stecker nach Anspruch 1, dadurch gekennzeichnet, dass der Steckerstift aus einem Aussenmantel (9) aus relativ hartem Material und aus einem Kern (10) aus weicherem Material besteht, und dass der Randbereich (7) durch die Stirnseite des Aussenmantels (9) gebildet wird.

3. Stecker nach einem der Ansprüche 1 oder 2, dadurch gekennzeichnet, dass die Anschrägung plan verläuft.

4. Stecker nach einem der Ansprüche 1 oder 2, dadurch gekennzeichnet, dass die Anschrägung zylindrisch nach innen gekrümmt verläuft.

5. Stecker nach einem der Ansprüche 1 oder 2, dadurch gekennzeichnet, dass die Anschrägung kugelförmig nach innen gekrümmt verläuft.

6. Stecker nach einem der Ansprüche 1 bis 5, dadurch gekennzeichnet, dass der Steckerstift wenigstens teilweise aus einem metallischen Sinterwerkstoff gefertigt ist.

7. Stecker nach einem der Ansprüche 1 bis 5, dadurch gekennzeichnet, dass der Steckerstift wenigstens teilweise aus einem keramischen Werkstoff gefertigt ist.

Fig. 1

Fig. 2

Fig. 3

Fig. 4

Fig. 5

| | Europäisches Patentamt | EUROPÄISCHER RECHERCHENBERICHT | Nummer der Anmeldung |
|---|---|---|---|
| | | | EP 90 81 0721 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 088 410 (NIPPON ELECTRIC) <br> * Figuren 3,4,5; Seiten 1,2; Seite 3, Zeilen 1-18 * <br> – – – | 1,3 | G 02 B <br> 6/38 <br> B 24 B 19/22 |
| A,D | PATENT ABSTRACTS OF JAPAN, Band 6, Nr. 263 (M-181), 22. Dezember 1982; <br> & JP-A-57 156 159 (FUJITSU K.K.) 27-09-1982 <br> * Ganzes Dokument * <br> – – – | 1,5 | |
| A | PATENT ABSTRACTS OF JAPAN, Band 11, Nr. 37 (P-543)[2484], 4. Februar 1987; <br> & JP-A-61 208 007 (FURUKAWA ELECTRIC CO., LTD) 16-09-1986 <br> * Ganzes Dokument * <br> – – – | 1 | |
| A | PATENT ABSTRACTS OF JAPAN, Band 8, Nr. 183 (P-296), 23. August 1984; <br> & JP-A-59 074 519 (SUMITOMO DENKI KOGYO K.K.) 27-04-1984 <br> * Ganzes Dokument * <br> – – – | 1,4 | |
| A | EP-A-0 262 770 (AMPHENOL CORP.) <br> * Spalte 5, Zeilen 41-56; Figur 1 * <br> – – – – – | 1,7 | RECHERCHIERTE SACHGEBIETE (Int. Cl.5) <br><br> G 02 B 6/00 <br> B 24 B 19/00 |

Der vorliegende Recherchenbericht wurde für alle Patentansprüche erstellt

| Recherchenort | Abschlußdatum der Recherche | Prüfer |
|---|---|---|
| Den Haag | 11 Januar 91 | MATHYSSEK K. |